# EUROPEAN PATENT SPECIFICATION

(11) **EP 0 532 800 B1**
(45) Date of publication and mention of the grant of the patent: **16.08.1995**
(21) Application number: 91202381.9
(22) Date of filing: 17.09.1991
(51) Int. Cl.: G01T 1/29

(54) **Method for recording and reproducing a pattern of penetrating radiation**
Verfahren zum Aufzeichnen und Nachweisen eines Strahlungsmusters
Méthode pour enregistrer et déceler un modèle de rayonnement

(43) Date of publication of application: 24.03.1993
(73) Proprietor: AGFA-GEVAERT naamloze vennootschap, 2640 Mortsel (BE)
(72) Inventor: Leblans, Paul, Agfa-Gevaert N.V., B-2640 Mortsel (BE); Celis, Antoine Constant, Agfa-Gevaert N.V., B-2640 Mortsel (BE)

(56) References cited:
- EP-A- 0 169 966
- EP-A- 0 417 844
- APPLIED SPECTROSCOPY, vol. 45, no. 5, January 1991, pages 765-770, Baltimore, US; M.J. PELLETIER et al: "Characterization of holographic band-reject filters designed for Raman spectroscopy"
- RESEARCH DISCLOSURE, December 1989, pages 991-992, disclosure no. 308117, US; "Read-out of photostimulable latent fluorescent images"

## Description

### 1. Field of the invention.

The present invention relates to a method for recording and reproducing a pattern of penetrating radiation.

### 2. Background of the Invention

In radiography the interior of objects is reproduced by means of penetrating radiation, which is high energy radiation also known as ionizing radiation belonging to the class of X-rays, gamma-rays and high-energy elementary particle radiation, e.g. beta-rays, electron beam or neutron radiation. For the conversion of penetrating radiation into visible light and/or ultraviolet radiation luminescent substances, called phosphors are used.

In a conventional radiographic system an X-ray radiograph is obtained by X-rays transmitted imagewise through an object and converted into light of corresponding intensity in a so-called intensifying screen (X-ray conversion screen) wherein phosphor particles absorb the transmitted X-rays and convert them into visible light and/or ultraviolet radiation to which a photographic film is more sensitive than to the direct impact of X-rays.

In practice the light emitted imagewise by said screen irradiates a contacting photographic silver halide emulsion layer film which after exposure is developed to form therein a silver image in conformity with the X-ray image.

More recently as described e.g. in US-P 3,859,527 and EP-A-0 169 966 an X-ray recording system has been developed wherein photostimulable storage phosphors are used having in addition to their immediate light emission (prompt emission) on X-ray irradiation the property to store temporarily a large part of the X-ray energy. Said energy is set free by photostimulation in the form of fluorescent light different in wavelength from the light used in the photostimulation. In said X-ray recording system the light emitted on photostimulation is detected photoelectronically and transformed into sequential electrical signals.

The basic constituents of such X-ray imaging system operating with a photostimulable storage phosphor are an imaging sensor containing said phosphor in particulate form normally in a plate or panel, which temporarily stores the X-ray energy pattern, a scanning laser beam for photostimulation, a photoelectronic light detector providing analogue signals that are converted subsequently into digital time-series signals, normally a digital image processor which manipulates the image digitally, a signal recorder, e.g. magnetic disk or tape, and an image recorder for modulated light exposure of a photographic film or an electronic signal display unit, e.g. cathode-ray tube. A survey of lasers useful in the read-out of photostimulable latent fluorescent images is given in the periodical Research Disclosure December 1989, item 308117.

Of special interest in the application of said image recording and reproducing method are particular barium fluorohalide phosphors identified in US-P 4,239,968.

According to said US-P a method is claimed for recording and reproducing a radiation image comprising the steps of (i) causing a visible ray- or infrared ray-stimulable phosphor to absorb a radiation passing through an object. (ii) stimulating said phosphor with stimulation rays selected from visible rays and infrared rays to release the energy of the radiation stored therein as fluorescent light, characterized in that said phosphor is at least one phosphor selected from the group of alkaline earth metal fluorohalide phosphors represented by the formula :

(Ba₁₋ₓMₓ ^{II})FX:yA

wherein :
M^{II} is one or more of Mg, Ca, Sr, Zn and Cd;
X is one or more of Br, Cl or I;
A is at least one member of the group consisting of Eu, Tb, Ce, Tm, Dy, Pr, Ho, Nd, Yb and Er; and
x is in the range 0 ≦ x ≦ 0.6 and y is in the range 0 ≦ y ≦ 0.2, and that the wavelength of said stimulating rays is not less than 500 nm.

In Fig. 3 of US-P 4,239,968 a graph shows the relationship between the wavelength of the stimulation rays and the luminance of the stimulated light, i .e. the stimulation spectrum wherefrom can be learned that said kind of phosphor has high photostimulation sensitivity to stimulation light of a He-Ne laser beam (633 nm) but poor photostimulability below 500 nm. The stimulated light (fluorescent light) is situated in the wavelength range of 350 to 450 nm with a peak at about 390 nm (ref. also the periodical Radiology, Sept. 1983, p.834. ).

From said US-P 4,239,968 can be learned that it is desirable to use a visible ray-stimulable phosphor rather than an infra-red ray-stimulable phosphor because the traps of an infra-red-stimulable phosphor are shallower than these of the visible ray-stimulable phosphor and accordingly the radiation image storage panel comprising the infra-red ray-stimulable phosphor exhibits a relatively rapid dark-decay (fading). Taking into account image fading read-out has to proceed relatively soon after the image-wise exposure to penetrating radiation and the read-out time (scanning time) has to be kept fairly short. Indeed, as explained in said US-P when the panel comprising an infra-red ray-stimulable phosphor is scanned with infra-red rays, and the fluorescent light emitted therefrom is processed electrically, a certain period of time is required to scan the overall face of the panel, and accordingly, there is the possibility that a difference arises between the initial output and the final output even though the initial portion and the final portion of the panel absorb the same amount of radiation beforehand.

For solving the problem described above it is desirable to use a photostimulable storage phosphor which has traps as deep as possible to avoid fading but such requires for emptying said traps light rays having substantially higher photon energy (shorter wavelength) than the usual He-Ne laser beam of 633 nm.

A further advantage of photostimulation with shorter wavelenght light in comparison with the commonly used 633 nm He-Ne laser beam is an improvement in image-sharpness because shorter wavelength light of e.g. 500 nm and shorter is less diffracted in a phosphor panel containing in a binder dispersed phosphor particles acting as a diffraction grating.

However, when using shorter wavelength light in the photostimulation the separation of the stimulating light from the fluorescent light obtained by stimulation becomes more difficult since for a good signal -to-noise ratio (S/N) in the detection the markedly higher energy of the shorter stimulating rays having a wavelength relatively close to the considerably weaker fluorescent light output signal has to be rejected without affecting the intensity of the fluorescent light.

As described in published EP-A 0 007 105 (ref. also US-P 4,258,264) in order to obtain a high signal to noise ratio (S/N) the stimulating rays must be prevented from entering the detection means of the stimulated fluorescent light emitted by the phosphor because the ratio of the energy of the stimulating light to the energy of said fluorescent light emitted on photostimulation is as high as 10⁴:1 to 10⁶:1 so that the detection means will be blind by the overwhelming power of the stimulating light (laser light), the noise of which will interfere with the fluorescent light image.

In order to effectively improve the S/N ratio it has been proposed to use a filter which cuts the light having wavelengths beyond the emission spectrum of the phosphor. Such can be done sufficiently effectively with cut-off or band pass colour filters known in the art when the maximum wavelength of the spectrum of the fluorescent light emission and the wavelength(s) of the spectral line or band of the stimulating light are sufficiently separated (e.g. separated by at least 100 nm) in wavelength.

Taking into account the objective of reducing the image-fading which can be achieved by using the deep traps in the phosphors that require photostimulation below 550 nm the fluorescent emission spectrum of many photostimulable phosphors closely approaches the spectral line or band of the stimulating light and more severe filtration than with the usual colour filters is required.

Particularly in case radiography is applied in medical diagnosis, it is desirable to operate a recording system having a sensitivity as high as possible in order to reduce the radiation dose applied to a patient. This implies that the noise should be reduced as much as possible in order to obtain a high signal-to-noise ratio, because a high signal-to-noise ratio is a prerequisite for images of high sharpness.

The more effectively the stimulating rays are prevented from entering the detecting means, the higher is the laser power that can be used to read out the phosphor plate without introducing considerable noise from the reflected stimulating laser light.

Application of a higher laser power implies a higher signal when the read-out speed is kept constant. Especially in these circumstances a more efficient blocking of stimulating light is in favour of a higher signal-to-noise ratio in the recording and reproducing of penetrating radiation images by means of photostimulable storage phosphors.

A more efficient system to prevent simultaneous detection of the stimulating light and the fluorescent light emitted by the photostimulated phosphor offers the possibility to increase the speed at which the image recorded in the stimulable phosphor is read out, without affecting the signal-to-noise ratio.

To obtain a high signal-to-noise ratio it is not only necessary to reduce the noise as much as possible, also the signal has to be as high as possible, which means that the light output of the stimulable phosphor in the stimulation stage should be as high as possible. This can be realized by stimulating the phosphor with laser light of a wavelength close to the wavelength of the highest stimulability of the storage phosphor. i .e. laser light that is matched as well as possible with the top in the stimulation spectrum of the phosphor. Apart from that, the highest fraction possible of the fluorescent emission light of the phosphor should reach the detector to obtain a strong signal.

It is very difficult to fulfil all these requirements to reach the highest signal-to-noise ratio simultaneously, especially when the emission wavelength of the storage phosphor is close to the wavelength of highest stimulability of the phosphor.

In a present commercial radiographic system operating with photostimulable storage phosphors photostimulation proceeds with He-Ne laser 633 nm stimulation light-using an Eu²⁺ doped barium fluorobromide phosphor having a stimulation maximum close to 600 nm and having a fluorescent light emission maximum at about 390 nm. Herein no special problems arise to sufficiently prevent the stimulating light from entering the detector; a classical colour cut-off or band pass filter (glass filter) serves the purpose.

Other efficiently photostimulable storage phosphors have not such a large wavelength gap between the wavelength of maximal fluorescence and wavelength of maximal photostimulability. Among these phosphors are Eu²⁺ doped alkaline earth halosilicates described in published European patent applications (EP-A) 0 304 121 and 0321 804, which phosphors can be photostimulated effectively with argon ion laser light of 514.5 nm and which have a fluorescent light emission spectrum (stimulation spectrum) with maximum at about 440 nm.

Still other phosphors that can be photostimulated effectively with light of wavelengths shorter than 550 nm are divalent europium activated barium fluorobromide phosphors the bromine-containing portion of which is stoichiometrically in excess of the fluorine portion. Such phosphors described in US-P 4,535,237 show a stimulation spectrum in which the emission intensity at the stimulation wavelength of 500 nm is higher than the emission intensity at the stimulation wavelength of 600 nm.

Selection of stimulating light with a wavelength closer to that of the fluorescent emission light implies that a filter of higher performance and wavelength selectivity than a classical colour filter has to be used in rejecting the very high energy stimulation light without attenuating the already weak fluorescent emission light at the entrance of the detector.

### 3. Objects and Summary of the Invention

It is an object of the present invention to provide a method of reading out a penetrating radiation image stored in a recording member containing a photostimulable phosphor wherein said reading out proceeds with a high signal-to-noise ratio even when operating said method at high reading out speed and/or using a stimulation light beam of high energy to release fluorescent light from said phosphor.

It is a further object of the present invention to provide a method for recording and reproducing a pattern of penetrating radiation comprising the steps of :
(i) causing a visible radiation stimulable phosphor to absorb penetrating radiation having passed through an object or emitted by an object and store energy of said penetrating radiation in said phosphor, and
(ii) stimulating said phosphor with visible radiation to release energy stored in said phosphor as fluorescent light, wherein said fluorescent light has a maximum of emission situated less than 80 nm remote from the spectral line or closest band edge of the emission band of the stimulating light source, and
(iii) detecting said fluorescent light with high signal-to-noise ratio.

It is still further an object of the present invention to provide an apparatus for reading out a radiation image recorded in a recording means containing a photostimulable phosphor with high efficiency, high speed and high signal-to-noise ratio.

In accordance with the present invention a method for recording and reproducing a pattern of penetrating radiation is provided which method comprises the steps of :
(i) causing a photostimulable storage phosphor to absorb penetrating radiation having passed through an object or emitted by an object thereby storing energy of said penetrating radiation in said phosphor, and
(ii) stimulating said phosphor with an electromagnetic radiation beam striking to release energy stored in said phosphor as fluorescent light, wherein said fluorescent light has a maximum of emission situated less than 80 nm remote from the spectral line or closest band edge of the emission band of the stimulating light source, and
(iii) detecting said fluorescent light after having substantially attenuated stimulating light by using at the entrance of said detection means at least one holographic band-reject filter attenuating by a factor of at least 10⁵ the stimulating light striking said filter.

In accordance with the present invention an apparatus for reading out a radiation image is provided, which apparatus comprises :
(1) a storage means which is a member comprising a photostimulable storage phosphor,
(2) a stimulating ray source for generating stimulating rays to which the photostimulable phosphor after storing therein the energy of a penetrating radiation pattern is exposed, wherein said fluorescent light has a maximum of emission situated less than 80nm remote from the spectral line or closest band edge of the emission band of the stimulating light source and
(3) a detection means for detecting the light emitted from the photostimulable phosphor by irradiation with said stimulating rays, wherein said apparatus comprises at the entrance of said detection means a holographic band-reject filter attenuating by a factor of at least 10⁵ the stimulating light striking said filter.

### 4. Detailed Description of the Invention

An important property of holographic band-reject filters is their very selective attenuation of light of a very small wavelength band as is generated by a monochromatic laser source and that they have a wide transmission band at both sides of the rejection band, which allows use of stimulating light with a wavelength close to the wavelength range of the stimulated emission.

As an example, the transmission spectrum of a holographic band-reject filter for 514.5 nm argon ion laser light is given in Fig. 2 of the article "Characterization of Holographic Band-Reject Filters Designed for Raman Spectroscopy" by M.J. Pelletier and R.C. Reeder published in the journal Applied Spectroscopy, Volume 45. Number 5, 1991, p.766. The holographic band-reject filter, 2 inch in diameter, for 514.5 nm light was obtained from Physical Optics Corporation, 20600 Gramercy Place, Suite 103, Torrance, California 90501, USA. Other holographic band-reject filters for 488 nm and 532 nm light are commercially available from said company under the Part Numbers RHE 488 and RHE 532 respectively.

Holographic band-reject filters are described by T. Jannson and J. Jannson, "High-Efficiency Bragg Holograms in The IR, Visible, UV and XUV Spectral Region, in Holographic Optics: Design and Applications, SPIE Vol . 883 SPIE, Bellingham, Washington, 1988), p.84.

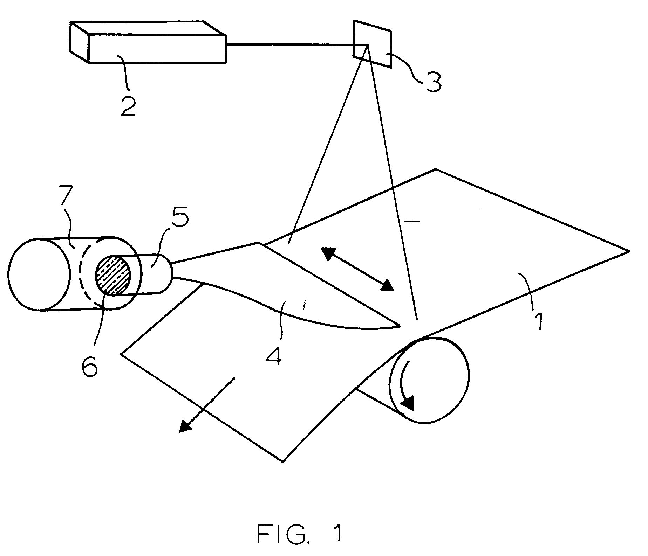

An embodiment of an apparatus suited for use according to the present invention is represented schematically in the accompanying drawing denoted as Fig. 1.

In said Fig. 1. member 1 represents a flexible phosphor panel containing a photostimulable phosphor having a fluorescent light emission maximum at 443 nm with half band width of about 30 nm as shown in Fig. 1 of published EP-A 0 304 121 and stimulation maximum at about 480 nm as shown in Fig. 2 of same EP-A.

Said phosphor panel 1 after imagewise exposure to an X-ray image is scanningwise exposed with 488 nm light of argon ion laser 2 using a light deflecting mirror 3.

A funnel-like fiber optics 4 collects emitted fluorescent light and reflected stimulating light. At the output side of said fiber optics a collimator lenssystem 5, e.g. 50-mm-focal length f/1.2 camera lens with +1 and +2 close-up lenses attached to collect and collimate the output light of the fiber optics, produces a bundle of sufficiently parallel light rays (collimated light). The collimated light is sent through a selected holographic band-reject filter 6. Light transmitted by said filter is focused on the photo-electron emissive surface of an electronic photomultiplier tube 7 producing an electrical signal in correspondence with the received imagewise modulated fluorescent light.

As alternatives for collimating the light emitted by the optical fibres the fibre ends of the fiber optics may be lense shaped or optical fibers with internal gradient of index of refraction (so-called gradient index lenses) are used as described e.g. by Yasuji Ohtsuka, Hirotaka Yamazaki, Yasuhiro Koike in Applied Optics, Aug. 1981, Vol . 20, No. 15, p. 2726-2730. Said optical fibers are available on the market under the tradename SELFOC.

In said apparatus more than one holographic band-reject filter may be present in series to increase the light blocking of the stimulating light. Optionally said holographic filter(s) is (are) applied in combination with other filters such as e.g. glass filters (colour cut-off or band pass filters), dichroic filters, interference filters, short wave pass filters and short wave band pass filters, band reject filters being produced by aligned interference filters, so-called Raman Notch (RN) Series filters sold by the company OMEGA OPTICAL INC. 3 Grove Street, PO Box 573, Brattleboro Vermont 05301 USA. Well collimated light is necessary for proper use of said Raman Notch filters (see the catalogue of said company).

In the method of recording and reproducing information according to the present invention preferred light sources emitting stimulating light in the wavelength range of 410 nm to 550 nm are an argon ion laser wherefrom the 514.5 nm or 488 nm line is used, the frequency doubled Nd-YAG laser (532 nm), a He-Cd laser emitting at 442 nm, or a solid state (semiconductor) laser having an emission below 500 nm or a solid state laser having a basic emission in the wavelength range of 820 to 1000 nm but operated with frequency doubling. Another way to produce stimulating light with a wavelength below 500 nm is by sum-frequency mixing or two-photon upconversion of solid state laser light as described e.g. in the periodical "Lasers & Optronics", May 1990, p. 65-70.

Suitable laser light sources for producing stimulating light with a wavelength shorter than 500 nm are mentioned in "Lasers & Optronics", December 1990, p. 38.

The superior performance of the holographic band-reject filter used according to the present invention is demonstrated by comparing the ratio of emission light transmittance to stimulation light transmittance of said holographic filter with that of a conventional colour filter (glass filter). The comparison is made for two combinations of stimulation and emission wavelengths of storage phosphors suited for use in radiography with laser stimulated luminescence of said phosphors.

As shown in US-P 4,535,237 divalent europium activated barium fluorobromide phosphor having bromine in excess with respect to fluorine have their maximum of fluorescent light emission at 390 nm and a stimulation spectrum with a top below 500 nm. For these phosphors stimulation with light of a He-Cd-laser (442 nm) or an Ar⁺ laser (488 nm) is therefore more efficient in photostimulation with the 633 nm light of a He-Ne laser.

For the holographic filter the transmission of the 390 nm light is equal to 0.8 and the transmission for the 442 nm light is less than 10⁻⁵. For a colour SCHOTT BG3 filter with a thickness such that the transmission at 390 nm is likewise 0.8 the transmission of 442 nm light is equal to 0.08. The ratio of the transmission of the emission light to the transmission of the stimulation light is therefore equal to 8x10⁴ in case only one holographic filter is used, and said ratio is equal to 10 in case the SCHOTT BG3 colour filter is used. The use of said holographic filter in comparison with said colour filter provides by the obtained better blocking of the stimulating light a much better signal-to-noise ratio.

In published EP-A 0 304 121 a divalent europium activated barium halosilicate phosphor is described with an emission spectrum having a top at about 443 nm and a half band width of 30 nm (see Fig. 1 of said EP-A). The stimulation spectrum of said phosphor having a maximum below 500 nm is given in Fig. 2.

For said phosphor stimulation with light of an Ar⁺ laser (488 nm) is therefore more efficient than with light of 514.5 nm.

For the holographic filter RHE 488 the transmission of the 443 nm light is equal to 0.8 and the transmission for the 488 nm light is less than 10⁻⁵. For a colour SCHOTT BG3 filter with a thickness such that the transmission at 443 nm is likewise 0.8 the transmission of the 488 nm light is equal to 0.19. The ratio of the transmission of the emission light to the transmission of the stimulation light is therefore equal to 8x10⁴ in case a holographic filter is used, and said ratio is equal to 4.2 in case the SCHOTT BG3 colour filter is used. The use of said holographic filter in comparison with said colour filter provides by the obtained better blocking of the stimulating light a much better signal-to-noise ratio.

The use of two holographic filters in series is preferred for obtaining a markedly improved signal-to-noise ratio.

## Claims

1. A method for recording and reproducing a pattern of penetrating radiation comprising the steps of :
(i) causing a photostimulable storage phosphor to absorb penetrating radiation having passed through an object or emitted by an object thereby storing energy of said penetrating radiation in said phosphor, and
(ii) stimulating said phosphor with an electromagnetic radiation beam striking said phosphor to release energy stored in said phosphor as fluorescent light, wherein said fluorescent light has a maximum of emission situated less than 80 nm remote from the spectral line or closest band edge of the emission band of the stimulating light source, and
(iii) detecting said fluorescent light after having substantially attenuated stimulating light by using at the entrance of said detection means at least one holographic band-reject filter attenuating by a factor of at least 10⁵ the stimulating light striking said filter.

2. Method according to claim 1, wherein said filter attenuates stimulating 514.5 nm or 488 nm light of an argon ion laser.

3. Method according to claim 1. wherein said filter attenuates stimulating 532 nm light of a frequency doubled Nd-YAG laser.

4. Method according to claim 1, wherein said filter attenuates stimulating 442 nm light of a He-Cd laser.

5. Method according to claim 1, wherein said filter attenuates stimulating light stemming from a solid state semiconductor laser having its inherent emission below 500 nm or having a basic emission in the wavelength range of 820 to 1000 nm but operated with frequency doubling.

6. Method according to claim 1, wherein said filter attenuates stimulating light with a wavelength below 500 nm produced via sum-frequency mixing or two-photon upconversion of solid state laser light.

7. An apparatus for reading out a radiation image, which apparatus comprises :
(1) a storage means which is a member comprising a photostimulable storage phosphor,
(2) a stimulating ray source for generating stimulating rays to which the photostimulable phosphor after storing therein the energy of a penetrating radiation pattern is exposed, wherein said fluorescent light has a maximum of emission situated less than 80nm remote from the spectral line or closest band edge of the stimulating light source and
(3) a detection means for detecting the light emitted from the photostimulable phosphor by irradiation with said stimulating rays, wherein said apparatus comprises at the entrance of said detection means at least one holographic band-reject filter attenuating by a factor of at least 10⁵ the stimulating light striking said filter.

8. Apparatus according to claim 7, wherein the stimulating ray source is an argon ion laser emitting at 514.5 or 488 nm.

9. Apparatus according to claim 7. wherein the stimulating ray source is a frequency doubled Nd-YAG laser operating at 532 nm.

10. Apparatus according to claim 7. wherein the stimulating ray source is a He-Cd laser emitting at 442 nm.

11. Apparatus according to claim 7, wherein the stimulating ray source is a solid state semiconductor laser having an emission below 500 nm or having a basic emission in the wavelength range of 820 to 1000 nm but is operated with frequency doubling.

12. Apparatus according to claim 7, wherein the stimulating ray source emits light with a wavelength below 500 nm produced via sum-frequency mixing or two-photon upconversion of solid state laser light.

## Patentansprüche

1. Ein Verfahren zur Aufzeichnung und Wiedergabe eines Strahlungsbildes aus durchdringender Strahlung, das die folgenden Schritte umfaßt :
(1) das Veranlassen, daß ein fotoanregbarer Speicherleuchtstoff durchdringende Strahlung, die von einem Gegenstand durchgelassen oder ausgestrahlt wurde, absorbiert, so daß Energie dieser durchdringenden Strahlung im Leuchstoff gespeichert wird,
(2) das Anregen des Leuchtstoffes mit einem auf diesen Leuchtstoff auftreffenden, elektromagnetischen Strahlenbündel, damit im Leuchtstoff gespeicherte Energie als Fluoreszenzlicht freigesetzt wird, wobei das Fluoreszenzlicht einen Ausstrahlungshöchstwert in einer Entfernung von weniger als 80 nm von der Spektrallinie oder von der nächsten Zonengrenze des Strahlungsbandes der Anregungslichtguelle aufweist, und
(3) das Erfassen des Fluoreszenzlichtes, nachdem das anregende Licht bedeutend abgeschwächt wurde unter Verwendung wenigstens einer am Eintritt der Erfassungseinrichtung befindlichen, holografischen Bandsperre, die das auf diese Sperre auftreffende, anregende Licht um einen Faktor von wenigstens 10⁵ abschwächt.

2. Verfahren nach Anspruch 1, dadurch gekennzeichnet, daß diese Sperre anregendes 514,5-nm- oder 488-nm-Licht eines Argon-Ionenlasers abschwächt.

3. Verfahren nach Anspruch 1, dadurch gekennzeichnet, daß diese Sperre anregendes 532-nm-Licht eines Nd:YAG-Lasers, der einer Frequenzverdopplung unterzogen wurde, abschwächt.

4. Verfahren nach Anspruch 1, dadurch gekennzeichnet, daß diese Sperre anregendes 442-nm-Licht eines He-Cd-Lasers abschwächt.

5. Verfahren nach Anspruch 1, dadurch gekennzeichnet, daß diese Sperre anregendes Licht abschwächt, das von einem Halbleiterlaser mit Festkörpermedium herrührt, der seine Eigenausstrahlung unter 500 nm oder eine Basisausstrahlung im Wellenlängenbereich von 820 bis 1000 nm aufweist, aber bei Frequenzverdopplung betrieben wird.

6. Verfahren nach Anspruch 1, dadurch gekennzeichnet, daß diese Sperre anregendes Licht mit einer Wellenlänge von weniger als 500 nm abschwächt, das durch Summenfrequenz-Mischen oder Zweiphotonen-Aufwärtsumwandlung von Festkörperlaserlicht erzeugt wird.

7. Ein Lesegerät für ein Strahlungsbild, das folgendes umfaßt :
(1) eine Speichereinrichtung, die ein einen fotoanregbaren Speicherleuchtstoff enthaltendes Glied darstellt,
(2) eine Anregungsstrahlenquelle zur Erzeugung anregender Strahlen, an denen der fotoanregbare Leuchtstoff ausgesetzt wird, nachdem die Energie eines Strahlungsbildes aus durchdringender Strahlung darin gespeichert worden ist, wobei das Fluoreszenzlicht einen Ausstrahlungshöchstwert in einer Entfernung von weniger als 80 nm von der Spektrallinie oder von der nächsten Zonengrenze des Strahlungsbandes der Anregungslichtguelle aufweist, und
(3) eine Erfassungseinrichtung zur Erfassung des Lichtes, das infolge der Bestrahlung mit diesen anregenden Strahlen vom fotoanregbaren Leuchtstoff aus ausgestrahlt wird, dadurch gekennzeichnet, daß dieses Gerät am Eintritt der Erfassungseinrichtung wenigstens eine holografische Bandsperre enthält, die das auf diese Sperre auftreffende, anregende Licht um einen Faktor von wenigstens 10⁵ abschwächt.

8. Gerät nach Anspruch 7, dadurch gekennzeichnet, daß die Anregungsstrahlenguelle ein bei 514,5 oder 488 nm ausstrahlender Argon-Ionenlaser ist.

9. Gerät nach Anspruch 7, dadurch gekennzeichnet, daß die Anregungsstrahlenguelle ein Nd:YAG-Laser ist, der einer Frequenzverdopplung unterzogen wurde und bei 532 nm betrieben wird.

10. Gerät nach Anspruch 7, dadurch gekennzeichnet, daß die Anregungsstrahlenguelle ein bei 442 nm ausstrahlender He-Cd-Laser ist.

11. Gerät nach Anspruch 7, dadurch gekennzeichnet, daß die Anregungsstrahlenguelle ein Halbleiterlaser mit Festkörpermedium ist, der eine Ausstrahlung unter 500 nm oder eine Basisausstrahlung im Wellenlängenbereich von 820 bis 1000 nm aufweist, aber bei Frequenzverdopplung betrieben wird.

12. Gerät nach Anspruch 7, dadurch gekennzeichnet, daß die Anregungsstrahlenguelle Licht mit einer Wellenlänge von weniger als 500 nm ausstrahlt, das durch Summenfreguenz-Mischen oder Zweiphotonen-Aufwärtsumwandlung von Festkörperlaserlicht erzeugt wird.

## Revendications

1. Une procédé pour l'enregistrement et la reproduction d'une image de rayonnement pénétrant comportant les opérations suivantes :
(1) on fait en sorte gu'un luminophore photostimulable d'emmagasinage absorbe un rayonnement pénétrant, ayant traversé un objet ou étant émis par un objet, de façon à emmagasiner l'énergie de ce rayonnement pénétrant dans le luminophore,
(2) on stimule le luminophore par un faisceau de rayonnement électromagnétigue étant incident sur ce luminophore, afin de libérer de l'énergie emmagasinée dans ce luminophore comme lumière fluorescente, où cette lumière fluorescente présente une valeur d'émission maximale située à une distance de moins de 80 nm de la raie spectrale ou du bout de bande le plus proche de la bande d'émission de la source de lumière stimulatrice, et
(3) on détecte cette lumière fluorescente, après avoir affaibli considérablement la lumière stimulatrice en se servant, à l'entrée du moyen de détection, d'au moins un filtre holographique coupe-bande affaiblissant d'un facteur d'au moins 10⁵ la lumière stimulatrice étant incidente sur ce filtre.

2. Procédé suivant la revendication 1, caractérisé en ce que ce filtre affaiblit la lumière stimulatrice de 514,5 nm ou de 488 nm d'un laser ionique à argon.

3. Procédé suivant la revendication 1, caractérisé en ce que ce filtre affaiblit la lumière stimulatrice de 532 nm d'un laser à Nd:YAG doublé en fréquence.

4. Procédé suivant la revendication 1, caractérisé en ce que ce filtre affaiblit la lumière stimulatrice de 442 nm d'un laser à hélium et cadmium.

5. Procédé suivant la revendication 1, caractérisé en ce que ce filtre affaiblit la lumière stimulatrice provenant d'un laser d'état solide à semiconducteur présentant son émission propre au-dessous de 500 nm ou une émission de base dans la gamme d'ondes de 820 à 1000 nm, mais mis en service à doublement de fréquence.

6. Procédé suivant la revendication 1, caractérisé en ce que ce filtre affaiblit la lumière stimulatrice à longueur d'onde inférieure à 500 nm produite parmixage à sommation de fréquence ou par conversion haute biphotonique de lumière laser d'état solide.

7. Un appareil pour la lecture d'une image de rayonnement comprenant :
(1) un dispositif d'emmagasinage qui est un élément renfermant un luminophore photostimulable d'emmagasinage,
(2) une source de rayons stimulateurs servant à la génération des rayons stimulateurs auxquels le luminophore photostimulable est exposé après que l'énergie d'une image de rayonnement pénétrant y a été emmagasinée, où la lumière fluorescente présente une valeur d'émission maximale située à une distance de moins de 80 nm de la raie spectrale ou du bout de bande le plus proche de la bande d'émission de la source de lumière stimulatrice, et
(3) un moyen de détection servant à la détection de la lumière émise à partir du luminophore photostimulable suite à l'irradiation par ces rayons stimulateurs, caractérisé en ce que cet appareil comprend, à l'entrée de ce moyen de détection, au moins un filtre holographique coupe-bande affaiblissant d'un facteur d'au moins 10⁵ la lumière stimulatrice étant incidente sur ce filtre.

8. Appareil suivant la revendication 7, caractérisé en ce que la source de rayons stimulateurs est un laser ionique à argon émissif à 514,5 ou 488 nm.

9. Appareil suivant la revendication 7, caractérisé en ce que la source de rayons stimulateurs est un laser à Nd:YAG doublé en fréquence fonctionnant à 532 nm.

10. Appareil suivant la revendication 7, caractérisé en ce que la source de rayons stimulateurs un laser à hélium et cadmium émissif à 442 nm.

11. Appareil suivant la revendication 7, caractérisé en ce que la source de rayons stimulateurs est un laser d'état solide à semiconducteur présentant une émission inférieure à 500 nm ou une émission de base dans la gamme d'ondes de 820 à 1000 nm, mais est mise en service à doublement de fréquence.

12. Appareil suivant la revendication 7, caractérisé en ce que la source de rayons stimulateurs émet de la lumière à longueur d'onde inférieure à 500 nm produite par mixage à sommation de fréquence ou par conversion haute biphotonique de lumière laser d'état solide.
